# EUROPÄISCHE PATENTANMELDUNG

(11) **EP 1 674 747 A2**
(43) Veröffentlichungstag der Anmeldung: **28.06.2006**
(21) Anmeldenummer: 05023599.3
(22) Anmeldetag: 28.10.2005
(51) Int. Cl.: F16C 33/78, F16J 15/32

(54) **Wälzlagerabdichtung**

(30) Priorität: 21.12.2004 DE 102004061384
(71) Anmelder: Federal-Mogul Sealing Systems Bretten GmbH, 75015 Bretten (DE)
(72) Erfinder: Hofmann, Michael, 65589 Hadamar (DE); Ross, Idris, 16689 Karlsdorf-Neuthard (DE)

(57) **Zusammenfassung**

Wälzlagerabdichtung mit einem als Ring ausgebildeten winkelförmigen Gehäuse und einem diesem radial gegenüberliegenden im Querschnitt ebenfalls winkelförmig ausgebildeten Laufring, wobei im Bereich des Gehäuses ein mit selbigem mittel- oder unmittelbar in Wirkverbindung stehendes scheibenförmig ausgebildetes PTFE-Dichtelement vorgesehen ist, dessen freies Ende unter einem vorgegebenen Winkel ausgelenkt ist und unter Bildung einer axialen Dichtstelle mit einem ebenfalls unter einem vorgegebenen Winkel abgebogenen Schenkel des Laufringes zusammenwirkt.

## Beschreibung

Die Erfindung betrifft eine Wälzlagerabdichtung.

Durch die EP-B 0 036 281 ist eine rotierende Flüssigkeitsdichtung bekannt geworden, die zwischen zwei koaxialen, relativ zueinander drehbaren Teilen einsetzbar ist. Mindestens ein Dichtungsring ist zwischen winkelförmig verlaufenden inneren und äußeren Gehäuseteilen vorgesehen, wobei der Dichtungsring radial auswärts divergierende entgegengesetzt axial gerichtete ringförmige Dichtlippen aufweist, die federnd an der jeweiligen abgebogenen Gegenfläche der Gehäuseteile anliegen. Für einige Abdichtungszwecke könnten Dichtungsringe auf Basis von Polytetrafluorethylen (PTFE) oder anderen Kunststoffen zum Einsatz gelangen.

In der DE-A 102 46 398 wird eine Wellenlippendichtung aus elastischem Material beschrieben, die zwischen einem Lagerring und einer mit einer Welle umlaufenden Schleuderhülse eingesetzt ist. Im eingebauten Zustand stellt sich eine axiale Überdeckung zwischen der axialen Dichtlippe der Dichtung und dem radialen Abschnitt der Schleuderhülse ein. Die Dichtkante der axialen Dichtlippe kann endseitig eine reibungsmindernde, insbesondere eine PTFE-Beschichtung aufweisen.

Der Erfindung liegt die Aufgabe zugrunde, eine Wälzlagerabdichtung bereitzustellen, die sowohl gegen Öl, Fett als auch Umgebungsmedien, wie Schmutz, Staub und Wasser abdichtet, wobei darüber hinaus die Reibkräfte erheblich reduziert werden sollen.

Diese Aufgabe wird gelöst durch eine Wälzlagerabdichtung, mit einem als Ring ausgebildeten winkelförmigen Gehäuse und einem, diesem radial gegenüberliegenden im Querschnitt ebenfalls winkelförmig ausgebildeten Laufring, wobei im Bereich des Gehäuses ein mit selbigem mittel- oder unmittelbar in Wirkverbindung stehendes scheibenförmig ausgebildetes PTFE-Dichtelement vorgesehen ist, dessen freies Ende unter einem vorgegebenen Winkel ausgelenkt ist und unter Bildung einer axialen Dichtstelle mit einem ebenfalls unter einem vorgegebenen Winkel abgebogenen Schenkel des Laufringes zusammenwirkt.

Vorteilhafte Weiterbildungen der erfindungsgemäßen Wälzlagerabdichtung sind den Unteransprüchen zu entnehmen.

Abweichend vom Stand der Technik können somit vom Strang abschneidbare scheibenartig ausgebildete PTFE-Dichtelemente zum Einsatz gelangen, die den Aufbau der Gesamtdichtung bei gleichzeitiger Reduzierung der Reibkräfte baulich und auch kostenmäßig wesentlich vereinfachen.

In vorteilhafter Weise steht das mit einem äußeren Lagerring des Wälzlagers verbundene radial außen vorgesehene Gehäuse mit dem PTFE-Dichtelement in Wirkverbindung. Die Verbindung kann beispielsweise durch Klemmung im zugehörigen Gehäuse oder aber durch Vulkanisation, ggf. unter Verwendung mindestens eines weiteren elastomeren Werkstoffes, mit dem zugehörigen Gehäuse herbeigeführt werden. Der dem Gehäuse radial gegenüberliegende Laufring ist mit dem inneren Lagerring des Wälzlagers verbunden. Gehäuse und Laufring sind hierbei durch Einpressen, der vorteilhafter Weise als Einbaueinheit ausgebildeten Wälzlagerabdichtung, im Freiraum zwischen den Lagerringen positioniert.

In seiner einfachsten Ausführung liegt der, einen axialen Dichtbereich bildende, freie Endbereich des scheibenförmigen Dichtelementes infolge seiner Auslenkung unter axialer Eigenspannung am gegenüberliegenden Schenkel des Laufringes an.

Sollte dies für spezielle Anwendungsfälle nicht ausreichen, wäre ein entsprechendes Federelement vorzusehen, um die gewünschte axiale Anpresskraft über eine lange Standzeit der Dichtung aufrechtzuerhalten.

Die Ausgestaltung einerseits des Gehäuses und andererseits des Laufringes kann unterschiedlichste Form haben. Es bietet sich zunächst einmal ein etwa U-förmiger Querschnitt an, wobei je nach Integration weiterer statischer und/oder dynamischer Dichtbereiche auch davon abweichende Querschnittsformen gegeben sein können.

Einem weiteren Gedanken der Erfindung gemäß, verbleiben die axialen Endbereiche des winkelförmigen Gehäuses sowie des winkelförmigen Laufringes im wesentlichen in gleichen radialen Ebenen, so dass ein leicht erzeugbares und transportables sowie ebenfalls einfach einzusetzendes Dichtelement gegeben ist.

Der Erfindungsgegenstand ist anhand eines Ausführungsbeispieles in der Zeichnung dargestellt und wird wie folgt beschrieben. Es zeigen:

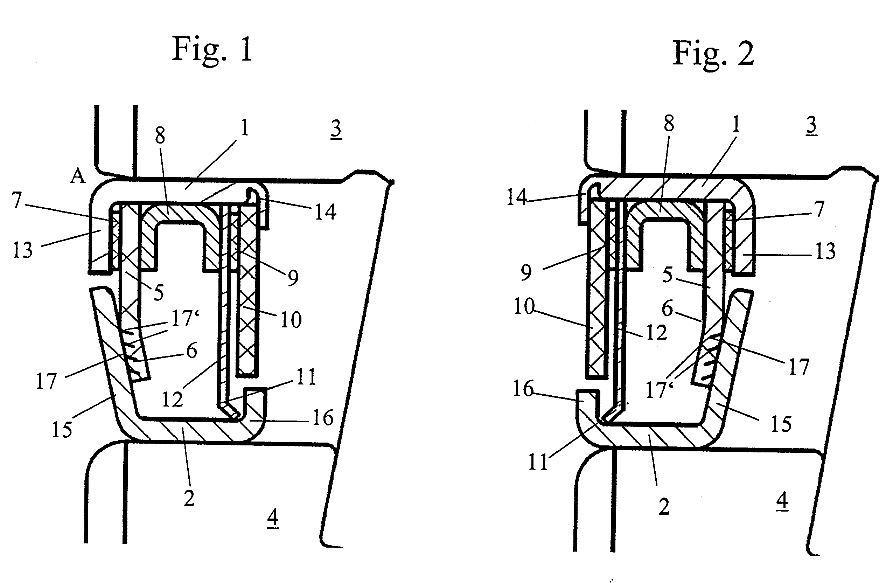

- Figuren 1 bis 6: Unterschiedliche Ausgestaltungsformen des Erfindungsgegenstandes.

Die Figuren 1 bis 6 zeigen unterschiedliche Ausführungsformen des Erfindungsgegenstandes, wobei die Figuren 1 und 2, 3 und 4 sowie 5 und 6 gleichbauende Wälzlagerabdichtungen beinhalten, jedoch bauteilmäßig in umgekehrter Anordnung.

Die Figuren 1 und 2 zeigen jeweils eine Wälzlagerabdichtung, die ein Gehäuse 1 sowie einen diesem radial gegenüberliegenden Laufring 2 beinhaltet, die beide mit Lagerringen 3,4 in Wirkverbindung stehen. In diesem Beispiel nimmt das radial äußere Gehäuse 1 ein scheibenförmig ausgebildetes, aus PTFE bestehendes, Dichtelement 5 auf, dessen freier Endbereich 6 axial nach innen unter einem vorgegebenen Winkel ausgelenkt ist. Das Gehäuse 1 ist U-förmig ausgebildet und nimmt darüber hinaus statisch wirkende Dichtelemente 7,9, einen Stützring 8, eine Abdeckscheibe 10 sowie einen weiteren mit einer Dichtlippe 11 versehenen, aus PTFE bestehenden Dichtkörper 12 auf. Sämtliche der Elemente 5,7,8,9,10,12 werden zwischen radialen Schenkeln 13,14 des radial äußeren Gehäuses 1 geklemmt und sind somit einstückig mit selbigem verbunden. Der Radialschenkel 14 ist materialmäßig geringer dimensioniert als der Radialschenkel 13, so dass ein erleichtertes Umbiegen möglich ist. Der radial innenliegende Laufring 2 weist ebenfalls zwei Radialschenkel 15,16 auf, von denen der Radialschenkel 15 unter einem vorgegebenen Winkel axial nach außen abgebogen ist. Zwischen dem freien Endbereich 6 des Dichtelementes 5 und dem Radialschenkel 15 wird ein axialer Dichtbereich 17 gebildet, wobei der freie Endbereich 6 in diesem Beispiel unter axialer Eigenspannung am Radialschenkel 15 anliegt. Der axiale Dichtbereich 17 wird hier gebildet durch konzentrisch zueinander verlaufende Förderrillen 17'. Alternative Ausgestaltungen, beispielsweise Schraubenwendeln, sind ebenfalls denkbar. Das Gehäuse 1 und der Laufring 2 sind bezüglich ihrer Baulänge so dimensioniert, dass ihre axialen Endbereiche A,B im wesentlichen in gleichen radialen Ebenen vorgesehen sind.

Eine Ausgestaltungsform der erfindungsgemäßen Wälzlagerabdichtung kann vorsehen, dass der freie Endbereich 6 des PTFE-Dichtelementes 5 mit einem hier nicht weiter dargestellten Federelement in Wirkverbindung gebracht wird.

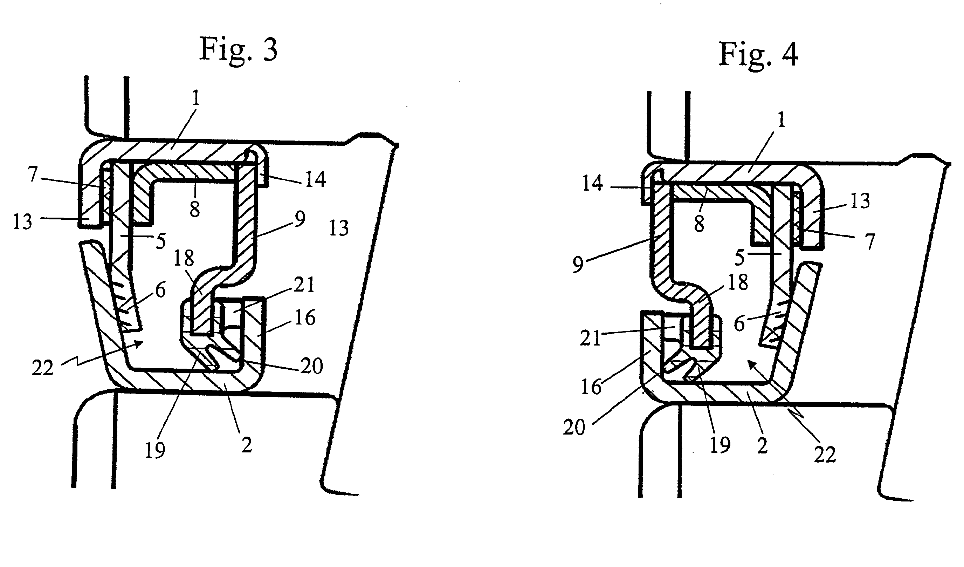

Die Figuren 3 und 4 zeigen eine Abwandlung der Wälzlagerabdichtung gemäß Figuren 1 und 2, wobei auch hier ähnliche Bauteile zum Einsatz gelangen. Soweit möglich werden daher gleiche Bezugsziffern vergeben. Erkennbar sind das Gehäuse 1, der Laufring 2, das PTFE-Dichtelement 5 samt ausgelenktem Endbereich 6. Ebenfalls eingesetzt werden ein statisches Dichtelement 7, ein Klemmelement 8 sowie eine Abdeckscheibe 9. Die Bauteile 5,7,8,9 werden in Analogie zu den Figuren 1 und 2 zwischen den Radialschenkeln 13,14 des radial äußeren Gehäuses 1 geklemmt. Am abgebogenen freien Ende 18 weist die Abdeckscheibe 9 einen daran anvulkanisierten, mehrere Dichtlippen 19,20 sowie an der Stirnfläche verteilte Noppen 21 beinhaltenden Dichtkörper 22 aus Elastomermaterial auf, wobei die Dichtlippen 19,20 und die Noppen 21 an unterschiedlichen Schenkelbereichen 16 des radial innenliegenden Laufringes 2 dichtend bzw. beabstandend zur Anlage kommen.

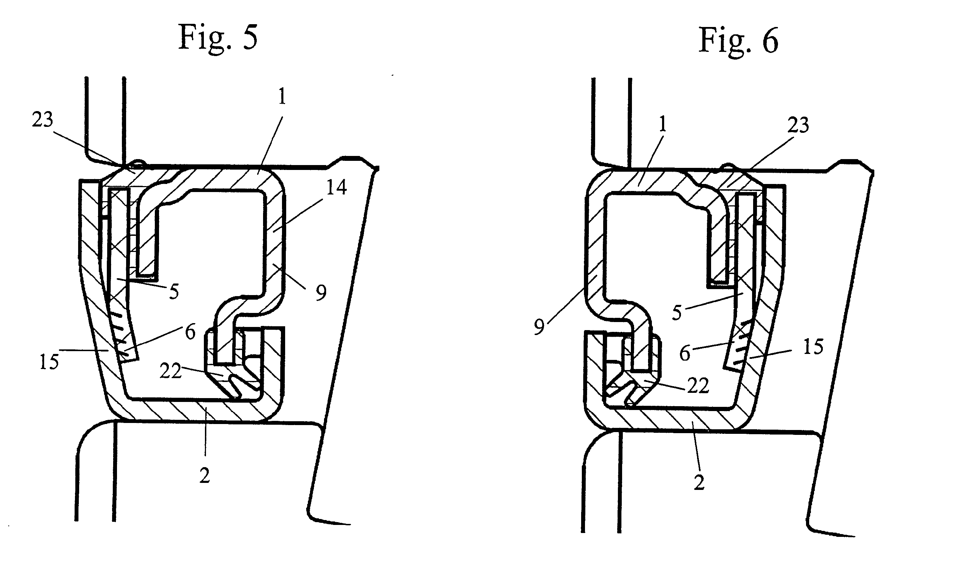

Die Figuren 5 und 6 zeigen eine weitere Ausgestaltungsform der vorangegangenen Figuren. Auch hier sind ein Gehäuse 1 und ein Laufring 2 gegeben, wobei abweichend zu den vorangegangenen Figuren das PTFE-Dichtelement 5 über einen vulkanisierten Elastomerkörper 23 mit dem radial außenliegenden Gehäuse 1 verbunden ist. Der zunächst unter einem Winkel verlaufende Radialschenkel 15 ist außerhalb des Endbereiches 6 des Dichtelementes 5 wieder im wesentlichen radial, in Richtung des Gehäuses 1, verlaufend vorgesehen. Der Schenkel 14 des Gehäuses 1 ist unter Bildung eines Abdeckelementes 9 radial verlängert und beinhaltet den bereits in den Figuren 3 und 4 angesprochenen aus Elastomermaterial bestehende Dichtkörper 22.

## Patentansprüche

1. Wälzlagerabdichtung mit einem als Ring ausgebildeten winkelförmigen Gehäuse (1) und einem diesem radial gegenüberliegenden im Querschnitt ebenfalls winkelförmig ausgebildeten Laufring (2), wobei im Bereich des Gehäuses (1) ein mit selbigem mittel- oder unmittelbar in Wirkverbindung stehendes scheibenförmig ausgebildetes PTFE-Dichtelement (5) vorgesehen ist, dessen freies Ende (6) unter einem vorgegebenen Winkel ausgelenkt ist und unter Bildung einer axialen Dichtstelle (17) mit einem ebenfalls unter einem vorgegebenen Winkel abgebogenen Schenkel (15) des Laufringes (2) zusammenwirkt.

2. Wälzlagerabdichtung nach Anspruch 1, **dadurch gekennzeichnet, dass** das Gehäuse (1) mit einem äußeren Lagerring (3) und der Laufring (2) mit einem inneren Lagerring (4) eines Wälzlagers in Wirkverbindung steht.

3. Wälzlagerabdichtung nach Anspruch 1 oder 2, **dadurch gekennzeichnet, dass** das PTFE-Dichtelement (5) durch Klemmung im zugehörigen Gehäuse (1) gehalten ist.

4. Wälzlagerabdichtung nach einem der Ansprüche 1 bis 3, **dadurch gekennzeichnet, dass** das PTFE-Dichtelement (5) durch Vulkanisation, ggf. unter Verwendung mindestens eines weiteren elastomeren Werkstoffes (23), mit dem zugehörigen Gehäuse (1) verbunden ist.

5. Wälzlagerabdichtung nach einem der Ansprüche 1 bis 4, **dadurch gekennzeichnet, dass** der Neigungswinkel des freien Endes (6) des Dichtelementes (5) im wesentlichen demjenigen des Schenkels (15) des Laufringes (2) entspricht.

6. Wälzlagerabdichtung nach einem der Ansprüche 1 bis 5, **dadurch gekennzeichnet, dass** das, das PTFE-Dichtelement (5) aufnehmende Gehäuse (1) im Querschnitt etwa U-förmig ausgebildet ist.

7. Wälzlagerabdichtung nach einem der Ansprüche 1 bis 6, **dadurch gekennzeichnet, dass** im Bereich des das PTFE-Dichtelement (5) aufnehmenden Gehäuses (1) zumindest ein weiterer Dichtkörper (12,22) vorgesehen ist, der mit mindestens einem Schenkel (16) des winkelförmigen Laufringes (2), eine radiale und/oder eine axiale Dichtstelle bildend, zusammenwirkt.

8. Wälzlagerabdichtung nach einem der Ansprüche 1 bis 7, **dadurch gekennzeichnet, dass** der Dichtkörper (12,22) aus einem Elastomermaterial, insbesondere PTFE, besteht.

9. Wälzlagerabdichtung nach einem der Ansprüche 1 bis 8, **dadurch gekennzeichnet, dass** der Dichtkörper (22) Teil eines Schenkelbereiches (14) des Gehäuses (1) ist.

10. Wälzlagerabdichtung nach einem der Ansprüche 1 bis 9, **dadurch gekennzeichnet, dass** der Dichtkörper (22) in unterschiedlichen Ebenen vorgesehene Dichtlippen (19,20) umfasst, die an unterschiedlichen Schenkelbereichen (16) des Laufringes (2) dichtend anliegen.

11. Wälzlagerabdichtung nach einem der Ansprüche 1 bis 10, **dadurch gekennzeichnet, dass** an der laufringseitigen Stirnfläche des Dichtkörpers (22), in Umfangsrichtung gesehen, mehrere Noppen (21) angeformt sind.

12. Wälzlagerabdichtung nach einem der Ansprüche 1 bis 11, **dadurch gekennzeichnet, dass** im Bereich des Gehäuses (1) mindestens eine statische Dichtung (7) und bei geklemmtem PTFE-Dichtelement (5) mindestens ein Stützring (8) vorgesehen ist.

13. Wälzlagerabdichtung nach einem der Ansprüche 1 bis 12, **dadurch gekennzeichnet, dass** das freie Ende (6) des PTFE-Dichtelementes (5) unter elastischer Eigenspannung am gegenüberliegenden Schenkel (15) des Laufringes (2) anliegt.

14. Wälzlagerabdichtung nach einem der Ansprüche 1 bis 13, **dadurch gekennzeichnet, dass** das freie Ende (6) des PTFE-Dichtelementes (5) unter Federspannung an dem gegenüberliegenden Schenkel (15) des Laufringes (2) anliegt.

15. Wälzlagerabdichtung nach einem der Ansprüche 1 bis 14, **dadurch gekennzeichnet, dass** die axialen Endbereiche (A,B) des winkelförmigen Gehäuses (1) sowie des Laufringes (2) im wesentlichen in gleichen radialen Ebenen vorgesehen sind.
